Europäisches Patentamt

European Patent Office

Office européen des brevets

(19)

(11) Veröffentlichungsnummer: **0 006 530**
**B1**

(12) # EUROPÄISCHE PATENTSCHRIFT

(45) Veröffentlichungstag der Patentschrift:
28.07.82

(51) Int. Cl.³: **G 01 K 11/12**, G 01 K 1/02

(21) Anmeldenummer: 79101906.0

(22) Anmeldetag: 12.06.79

(54) **Faseroptisches Temperaturmessgerät.**

(30) Priorität: 26.06.78 SE 7807199

(43) Veröffentlichungstag der Anmeldung:
09.01.80 Patentblatt 80/1

(45) Bekanntmachung des Hinweises auf die Patenterteilung:
28.07.82 Patentblatt 82/30

(84) Benannte Vertragsstaaten:
CH DE FR GB IT NL

(56) Entgegenhaltungen:
CH-A-490 062
FR-A-2 213 493
FR-A-2 319 120
FR-A-2 400 193
GB-A-1 103 059
US-A-4 016 761
US-A-4 075 493

IBM TECHNICAL DISCLOSURE BULLETIN, Band 20,
Oktober 1977, Nr. 5, New York, K. BLOTEKJAER et al.:
«Remote temperature sensor», Seite 1929

(73) Patentinhaber: ASEA AB, S-721 83 Västeras (SE)

(72) Erfinder: Sander, Lars, Dipl.-Ing., Bernsborgstigen 6,
S-722 18 Västeras (SE)

(74) Vertreter: Boecker, Joachim, Dr.-Ing.,
Rathenauplatz 2-8, D-6000 Frankfurt a.M. 1 (DE)

## Faseroptisches Temperaturmessgerät

Die Erfindung betrifft ein faseroptisches Temperaturmessgerät gemäss dem Oberbegriff des Anspruches 1. Ein solches Messgerät ist bekannt aus der französischen Patentveröffentlichungsschrift 2 319 120. Das Arbeitsprinzip des Messgerätes macht von der Fähigkeit bestimmter Materialien Gebrauch, ihre Farbe in Abhängigkeit der Temperatur zu ändern. Dabei ist nicht nur an Farben im engeren Sinne, also im Bereich des sichtbaren Lichtes gedacht, sondern allgemein auch im unsichtbaren Bereich, wie z.B. im Bereich der ultravioletten oder infraroten Strahlung.

Bei Temperaturmessungen ist man häufig daran interessiert, die Messung mit einer nichtelektrischen Methode vorzunehmen, welche die Transmission des Lichtes in optischen Fasern ausnutzt. Solche Messungen sind besonders vorteilhaft in explosionsgefährdeter Umgebung und in Gebieten mit starken elektrischen oder magnetischen Feldern. Es ist bekannt, faseroptische Thermometer zu verwenden, bei denen die temperaturabhängige Ausdehnung eines Körpers die Transmission in einem faseroptischen System beeinflusst. Bei einem solchen bekannten Geber wird Licht von einer lichteinleitenden Faser auf die konkave Oberfläche einer in einem Behälter befindlichen Flüssigkeit geworfen, die die zu messende Temperatur angenommen hat. Durch Temperaturveränderungen wird der Abstand zwischen der konkaven Oberfläche und dem Faserende geändert, wodurch die Lichtmenge in einer vom Geber fortleitenden Faser beeinflusst wird. Ein solcher Geber hat den Nachteil, dass er nicht überall anbringbar ist.

Das aus der französischen Patentveröffentlichungsschrift 2 319 120 bekannte Messgerät arbeitet mit einem Geber, der im wesentlichen aus einer dünnen Platte eines Halbleitermaterials besteht, dessen Absorptionskante temperaturabhängig ist. Das auf das Gebermaterial einwirkende Exzitationslicht ist monochromatisch, und es wird das Transmissionsverhalten dieses Gebermaterials gegenüber dem Exzitationslicht erfasst und als Messwert für die Temperatur ausgewertet. Der Geber dieses Gerätes ist klein und kann beispielsweise in den Wicklungen elektrischer Geräte untergebracht werden, um die dort herrschende Temperatur zu messen. Ein Nachteil dieses Gebers sowie auch des obengenannten bekannten Gebers besteht darin, dass man die temperaturabhängigen Transmissionsänderungen nicht von Transmissionsänderungen (Dämpfungen) unterscheiden kann, die durch andere Einflüsse verursacht werden. Solche unerwünschten Dämpfungen können durch Biegung der Faser oder an einer Verbindungsstelle der Faser auftreten. Beispielsweise erleidet eine Faser mit einem Durchmesser von 400 μm an einer Krümmung mit einem Radius von 10–30 mm einen Transmissionsverlust von 40%. In der Praxis muss ein solcher Geber daher mit einer bekannten Temperatur geeicht werden, nachdem er im Messobjekt eingebaut ist.

Dies kann schwierig oder gar unmöglich sein, wenn beispielsweise die Temperatur in der Wicklung einer elektrischen Maschine oder eines Transformators gemessen werden soll. Der genannte Nachteil ist noch ausgeprägter in solchen Fällen, in denen die optische Faser während der Messung einer nichtkontrollierbaren Verformung ausgesetzt ist.

Ein weiterer Nachteil der bekannten Anordnung nach der französischen Patentveröffentlichungsschrift 2 319 120 besteht darin, dass bei den dort für den Geber verwendeten Materialien die Absorptionskante nicht besonders scharf ausgeprägt ist.

Aus der US-PS 4 075 493 ist ein optisches Temperaturmessgerät bekannt, das nach einem anderen Prinzip, wie das zuvor genannte Gerät arbeitet. Als Gebermaterial wird ein lumineszenzfähiges Material verwendet, bei dem das emitierte Licht in verschiedenen Wellenlängenbereichen auftritt und die Intensität des in den einzelnen Wellenlängenbereichen auftretenden Lichtes temperaturabhängig ist. Für die Auswertung wird also nicht ein Teil des Exzitationslichtes verarbeitet, sondern das vom Gebermaterial emitierte andersartige Licht. Zur Kompensation systembedingter Fehler wird bei diesem bekannten Gerät das in zwei verschiedenen Wellenlängenbereichen vom Gebermaterial emitierte Licht isoliert. Durch Quotientenbildung dieser beiden Lichtsignale wird dann ein temperaturabhängiges Signal gewonnen, welches von systembedingten Fehlern im wesentlichen unabhängig ist.

Der Erfindung liegt die Aufgabe zugrunde, ein Temperaturmessgerät der in der französischen Veröffentlichungsschrift 2 319 120 beschriebenen Art in der Weise weiterzuentwickeln, dass die Beeinflussung des Messergebnisses durch variierende Dämpfungen im Lichtleitersystem im wesentlichen beseitigt ist.

Zur Lösung dieser Aufgabe wird ein faseroptisches Temperaturmessgerät nach dem Oberbegriff des Anspruches 1 vorgeschlagen, welches erfindungsgemäss die im kennzeichnenden Teil des Anspruches 1 genannten Merkmale hat.

Vorteilhafte Weiterbildungen der Erfindung sind in den Unteransprüchen genannt.

Durch die Erfindung wird eine Beseitigung der Beeinflussung des Messergebnisses durch veränderliche Dämpfungen des Lichtleitersystems erreicht. Ferner wird durch die Erfindung ein Messgerät geschaffen, bei welchem der Geber keine beweglichen Teile hat, und bei welchem der Messkanal mit einer einzigen optischen Faser ausgeführt werden kann.

Die Verwendung eines Farbpigmentes als Gebermaterial ist deshalb vorteilhaft, weil Farbpigmente eine sehr deutlich ausgeprägte Absorptionskante mit hervorragender Temperaturabhängigkeit in dem für das Gerät nach der Erfindung in Betracht kommenden spektralen Bereich haben. Hierdurch wird die Genauigkeit der Temperaturmessung zusätzlich zu der Genauigkeitsverbesserung durch die Kompensation systembedingter Fehlereinflüsse weiter verbessert.

Die Erfindung basiert auf der Verwendung eines Materials, dessen Absorptionsspektrum, d.h. also dessen Farbe sich mit der Temperatur ändert. Dieses Material wird in ein optisches System eingebaut. Das Material wird so angeordnet, dass es die zu messende Temperatur annimmt. Optische Fasern werden zur Einleitung von Licht in das Material und zur Fortleitung von wenigstens einem Teil des Lichtes verwendet, welches nicht vom Material absorbiert wird. Das die Temperatur erfassende Material hat in seinem Absorptionsspektrum eine temperaturabhängige Absorptionskante, d.h. einen sich mit der Temperatur verschiebenden ausgeprägten Übergang von hoher zu niedriger Absorption. Das Messgerät enthält Anordnungen zur optischen Abtastung der Absorptionskante durch Bestimmung des Absorptionsvermögens des Materials in mindestens zwei verschiedenen Wellenlängenbereichen des auf das Material geleiteten Lichtes. Das Messgerät enthält ausserdem Anordnungen zur Auswertung der bei der optischen Abtastung gewonnenen Signale.

Prinzipiell kann die Messung so ausgeführt werden, dass die Temperaturabhängigkeit des Absorptionsvermögens entweder aus dem spektralen Reflexionsvermögen des Materials oder aus dem spektralen Transmissionsvermögen des Materials abgeleitet wird. Im letztgenannten Falle erfolgt die Reflexion des ausgesandten Lichtes, nachdem das Licht das Material passiert hat. Das Licht, das dabei auf den Detektor gelangt, ist somit durch das Material transmittiert worden.

Dadurch, dass die Messung mit Licht innerhalb mehrerer Wellenlängenbereiche durchgeführt wird, wobei auch unsichtbares Licht verwendet werden kann, kann die Farbe als eine relative Grösse bestimmt werden. Man wird dabei unabhängig vom absoluten Niveau des Absorptionsvermögens des temperaturerfassenden Materials ausgehen. In der einfachsten Ausführung wird die Farbbestimmung in zwei Wellenlängenbereichen vorgenommen, doch können auch mehr als zwei Wellenlängenbereiche verwendet werden, um die Präzision der Messung zu erhöhen. Die Trennung der Wellenlängenbereiche voneinander kann bei der Lichtquelle beispielsweise durch Verwendung von Leuchtdioden mit verschiedenen Wellenlängen, d.h. schmalbandigem Licht, erfolgen. Eine andere Möglichkeit besteht darin, dass man eine einzige breitbandige Lichtquelle verwendet, und die Spektralabhängigkeit mit Hilfe von Filtern erreicht. Die Filterung kann auch auf der Detektorseite erreicht werden, und zwar entweder durch die Anwendung von Detektoren, die untereinander eine unterschiedliche Spektralabhängige Empfindlichkeit haben, oder durch die Anwendung von Detektoren gleicher Art, die mit verschiedenen Filtern versehen sind. Die Filter können auch beweglich montiert sein und vor der Lichtquelle oder dem Detektor, die beide breitbandig sind, rotieren.

Der faseroptische Strahlengang kann in vielen verschiedenen Arten ausgeführt sein. Bedingung ist jedoch, dass das Licht in den verschiedenen Wellenlängenbereichen über optische Fasern von der Lichtquelle oder den Lichtquellen zu dem temperaturempfindlichen Material geleitet wird. Nach der Reflexion auf dem oder der Transmission durch das Material wird das zurückgeworfene Licht über optische Fasern zum Detektor oder zu den Detektoren geleitet.

Anhand der in den Figuren gezeigten Ausführungsbeispiele und Diagramme soll die Erfindung näher erläutert werden.

Es zeigen:

Fig. 1 und 2 Messgeräte unter Anwendung von zwei separaten Lichtquellen,

Fig. 3 die Abhängigkeit der Absorption von der Wellenlänge des Lichtes,

Fig. 4 eine Anordnung mit einem rotierenden Filter,

Fig. 5 den Aufbau der Filterscheibe des Filters in Fig. 4,

Fig. 6 den Transmissionsverlauf für eine Anzahl verschiedener Wellenlängen,

Fig. 7 ein Messgerät nach der Erfindung mit einer breitbandigen Lichtquelle und Filtern vor den Detektoren,

Fig. 8 ein Ausführungsbeispiel für eine Auswertungselektronik,

Fig. 8a das in der Anordnung nach Fig. 8 austretende Signal.

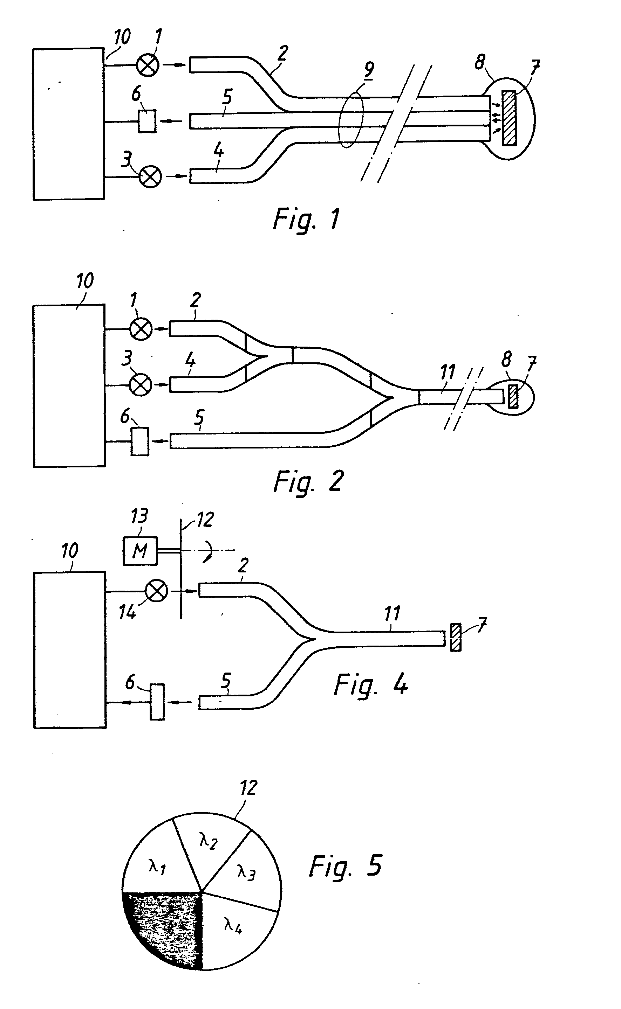

Wenn der Lichttransport in mehreren Fasern erfolgt, dann sollen diese gemeinsam in demselben Kabel geführt werden, damit sie untereinander dieselben Biegungen erfahren. Fig. 1 zeigt, dass das Licht von einer Lichtquelle 1 in eine Faser 2 und das Licht von einer Lichtquelle 3 in eine Faser 4 eingeleitet wird. Diese beiden Fasern werden zusammen mit einer Faser 5, die mit einem Detektor 6 zusammenwirkt, zu dem temperaturerfassenden Material 7 geführt, das mit Hilfe von Leim 8 oder auf andere Weise am Ende des Faserkabels 9 befestigt ist, das die drei optischen Fasern enthält. Die Lichtquellen und der Detektor sind an eine Elektronikeinheit 10 angeschlossen, welche die Lichtquellen steuert und das vom Detektor kommende Licht auswertet. Diese Einheit wird unten ausführlicher beschrieben.

Das temperaturerfassende Material 7 kann in einer Hülle aus Glas, Gummi oder einem ähnlichen Material eingeschlossen sein. Wenn ein in Glas eingeschlossenes Material mit seinem Einschlussmaterial direkt an den Faserenden befestigt wird, erhält man eine Reduzierung der Reflexe von den Faserendflächen, da das Material auf beiden Seiten der Endflächen im wesentlichen denselben Brechungsindex hat.

Das temperaturerfassende Material kann an den Faserenden befestigt sein, so wie es in den Fig. 1 und 2 gezeigt ist, oder es kann im Verhältnis zum Faserende frei angeordnet sein, so wie es Fig. 4 zeigt. Im letztgenannten Fall kann das Material 7, eventuell in eine durchsichtige Hülle eingeschlossen, auf einem im Verhältnis zum Faserende beweglichen Teil angeordnet sein. Eine Anwendungsmöglichkeit von vielen ist die Messung der Temperatur in rotierenden Maschinenteilen, beispielsweise im Rotor einer elektrischen Maschine. Das Material 7 wird dabei auf dem Maschinenteil, beispielsweise einer Wicklungsspule, angebracht, dessen Temperatur gemessen werden soll. Die Faser 11 wird so angeordnet, dass sie zumindest während eines Teils einer Umdrehung eines Maschinenteils Licht auf das Material werfen kann.

Alternativ kann eine spiegelnde Fläche hinter dem Material angeordnet werden. Die Strahlung, die durch das Material hindurchgeht, wird durch die Spiegelfläche in das Material reflektiert und passiert dieses erneut auf seinem Weg in eine lichtfortleitende Faser. Die Strahlung, die vom Detektor empfangen wird, ist somit durch das Material transmittiert worden.

Eine geeignete Ausführungsform des Fasersystemes besteht gemäss Fig. 2 darin, sowohl das einfallende wie das reflektierte Licht durch eine gemeinsame Faser 11 zu leiten. Verzweigungen der Lichtleiter geschehen mit bekannten Techniken.

Bei einer praktischen Ausführung der Erfindung nach den Fig. 1 und 2 bestehen die Lichtquellen aus Leuchtdioden mit der Wellenlänge 590 bzw. 950 nm. Der Detektor besteht aus einer Silizium-Fotodiode, die gegenüber Licht mit diesen Wellenlängen sehr empfindlich ist. Die optische Faser kann aus einer kommerziell zugänglichen stepindex Faser bestehen, wie beispielsweise einer Quarz-Silice 400 μ Faser.

Das temperaturerfassende Material, welches die Endfläche der Faser überdeckt, soll chemisch stabil sein, und die Farbänderungen sollen reversibel sein. Als Material werden Farbpigmente verwendet. Hierzu gehören Metalloxide, beispielsweise Eisenoxid. Auch andere Farbpigmente, wie Bleimennige, kommen in Betracht.

Das temperaturerfassende Material kann auch als Bestandteil im Lichtleitermaterial vorhanden sein, und zwar zweckmässigerweise in Partikelform. Das Material kann im Kern und/oder im Mantel der lichtleitenden Faser vorgesehen werden.

Fig. 3 zeigt schematisch die Abhängigkeit der Absorption von der Wellenlänge $\lambda$ (Absorptionsspektrum) bei zwei verschiedenen Temperaturen für ein derartiges Material. Wie man sieht, zeigt die Absorptionskurve mit zunehmender Wellenlänge einen ausgeprägten Übergang von hoher zu niedriger Absorption und bildet dabei eine sogenannte Absorptionskante. Die Wellenlängen 590 und 950 nm sind in Fig. 3 eingetragen, und das Diagramm zeigt, dass die Absorptionskurve bei 950 nm im wesentlichen konstant ist, dagegen im Bereich von 590 nm stark variiert. Die Absorptionskanten für zwei unterschiedliche Temperaturen $T_1$, $T_2$ sind eingetragen, wobei $T_2 > T_1$ ist. Die Temperaturkurven zeigen, dass die Absorption in dem Bereich von $\lambda = 950$ nm bei steigender Temperatur kräftig zunimmt. Die Änderung der Absorption, d.h. die Verschiebung der Absorptionskante bei einer bestimmten Wellenlänge, kann daher als Mass für die Veränderung der Temperatur des Materials genutzt werden.

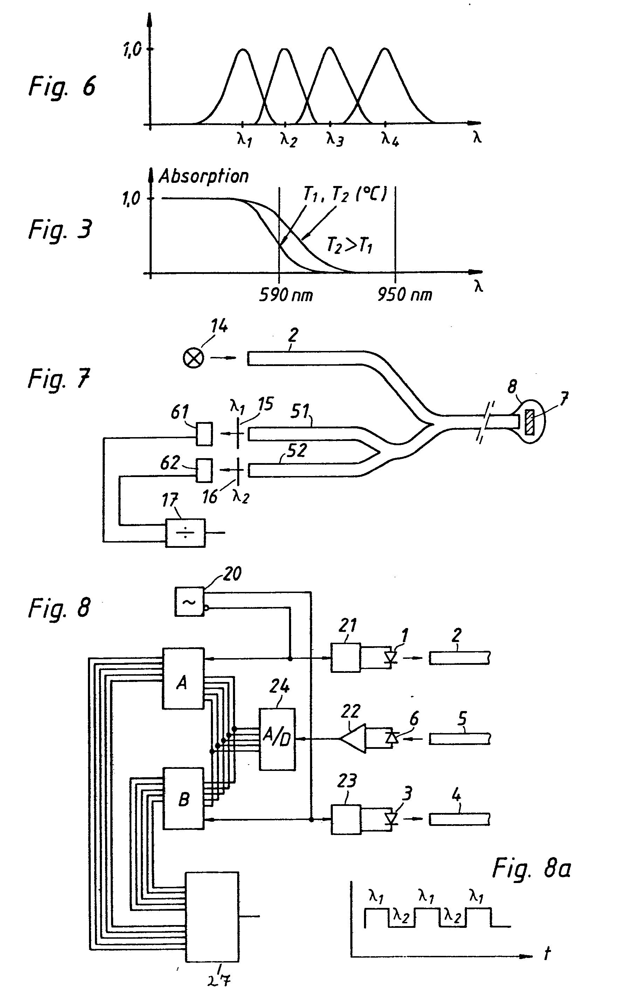

Es ist nicht unbedingt erforderlich, dass die Lichtquellen schmalbandig sind. Fig. 4 zeigt eine Anordnung mit einer Filterscheibe 12, die von einem Motor 13 angetrieben wird und die zwischen einer breitbandigen Lichtquelle 14 und der Faser 2 angebracht ist. Die Filterscheibe, die in Fig. 5 gezeigt ist, ist in mehrere für verschiedene Wellenlängenbereiche $\lambda_1$, $\lambda_2$, $\lambda_3$, $\lambda_4$ lichtdurchlässige Sektoren aufgeteilt. Ein Sektor kann undurchlässig für Licht gemacht werden. Fig. 6 zeigt die Spektralverteilung für die einzelnen Wellenlängenbereiche, die sich gegenseitig überlappen können. Wenn die Lichtquelle 14 weisses Licht abgibt und eine rotierende Filterscheibe 12 gemäss Fig. 5 und 6 verwendet wird, so zeigen die Signale der Detektoren auf der Empfangsseite, die hier entsprechenden Filtern zugeordnet sind, unterschiedliche Temperaturabhängigkeiten. Für die verschiedenen Temperaturbereiche können unterschiedliche Kombinationen von Filtern verwendet werden. Alternativ kann eine Zusammensetzung von vielen Filtern benutzt werden, um die Genauigkeit der Messung zu erhöhen. Fig. 7 zeigt die Verwendung einer breitbandigen Lichtquelle 14 und zweier Detektoren 61, 62 mit ihrem jeweiligen Filter 15, 16 für den jeweiligen Wellenlängenbereich $\lambda_1$, $\lambda_2$. Die Ausgangssignale der beiden Detektoren werden einem Divisionsglied 17 zugeführt, welches den Quotienten aus den beiden Eingangsgrössen bildet, dessen Grösse von der Temperatur des Materials abhängig ist.

Fig. 8 zeigt ein Beispiel einer elektronischen Schaltung für den Temperaturgeber. Ein Oszillator 20 steuert über Speiseglieder 21, 23 zwei Leuchtdioden 1, 3, die unterschiedliche Strahlungsfrequenzbereiche $\lambda_1$ und $\lambda_2$ haben, derart, dass abwechselnd die eine oder andere Leuchtdiode Licht ausstrahlt. Die Fotodiode 6, die gegenüber beiden Wellenlängen empfindlich ist, gibt über einen Verstärker 22 ein Signal, das dem Reflexionsvermögen für die betreffende Wellenlänge proportional ist. Der zeitliche Verlauf des Signals geht aus Fig. 8a hervor. Dieses Signal wird über einen Analog-Digital-Wandler 24 in digitaler Form abgebildet. Der Oszillator 20 steuert ebenfalls zwei Register A und B, so dass das digitale Signal für die betreffende Wellenlänge in seinem jeweiligen Register A oder B gespeichert wird. Der Inhalt der Register A und B wird einem digitalen Glied 27 zugeführt, das den Quotienten aus den Inhalten der Register bildet und ein Ausgangssignal abgibt, das die zu messende Temperatur beschreibt. Das Glied 27 kann ein IC-Glied, ein Mikroprozessor, ein Computer usw. sein.

Wenn sich das Transmissionsvermögen der Messfaser ändert, beispielsweise dadurch, dass die Faser gebogen oder auf andere Weise deformiert wird, so werden die Signale für die einzelnen Wellenlängen prozentuell gleich stark geändert, so dass der Quotient aus diesen Signalen unverändert bleibt.

Ein Messsystem nach der Erfindung kann beispielsweise in einem Temperaturbereich von 0 bis 500 °C verwendet werden. Es ist jedoch zu beachten, dass für Temperaturen, die über 250 °C liegen, die Fasern ganz aus Glas bestehen müssen.

## Patentansprüche

1. Faseroptisches Temperaturmessgerät mit einem Geber, der ein der zu messenden Temperatur ausgesetztes Material enthält, dessen Absorptionsspektrum einen ausgeprägten temperaturabhängigen Übergang von hoher zu niedriger Absorption, eine sogenannte Absorptionskante, aufweist, mit optischen Fasern zum Einleiten von Licht in das genannte Material und zum Fortleiten mindestens eines Teils des nicht vom Geber absorbierten Lichtes zur optischen Abtastung der Absorptionskante durch Bestimmung des Absorptionsgrades des auf das Material geleiteten Lichts und zur Auswertung der bei der optischen Abtastung erhaltenen Signale als Mass für die Temperatur, dadurch gekennzeichnet, dass das genannte Material (7) ein Farbpigment ist, dass Anordnungen zur optischen Abtastung der Absorptionskante des genannten Materials (7) in mindestens zwei Wellenlängenbereichen vorhanden sind, wobei in mindestens einem dieser Wellenlängenbereiche wenigstens ein Teil der Absorptionskante liegt, und dass die Auswertungseinheit Anordnungen enthält, welche die durch Abtastung in den wenigstens zwei Wellenlängenbereichen gewonnenen Signale derart vergleicht, dass das Ausgangssignal des Messgerätes von Dämpfungen in den optischen Kanälen unabhängig ist.

2. Messgerät nach Anspruch 1, dadurch gekennzeichnet, dass das Farbpigment ein Metalloxid ist.

3. Messgerät nach Anspruch 1, dadurch gekennzeichnet, dass das Farbpigment aus Bleimennige besteht.

4. Messgerät nach Anspruch 2, dadurch gekennzeichnet, dass das Metalloxid Eisenoxid ist.

5. Messgerät nach einem der vorhergehenden Ansprüche, dadurch gekennzeichnet, dass die Temperaturabhängigkeit des Absorptionsvermögens aus dem spektralen Reflexionsvermögen des Materials abgeleitet wird.

6. Messgerät nach einem der vorhergehenden Ansprüche, dadurch gekennzeichnet, dass die Temperaturabhängigkeit des Absorptionsvermögens aus dem spektralen Transmissionsvermögen des Materials abgeleitet wird.

7. Messgerät nach einem der vorhergehenden Ansprüche, dadurch gekennzeichnet, dass Anordnungen (17) vorhanden sind zur Bildung des Quotienten aus zwei verschiedenen Wellenlängenbereichen entsprechenden Werten des Absorptionsvermögens des Materials und dass Anordnungen zur Umwandlung des Quotientenwertes in einen Temperaturmesswert vorhanden sind.

8. Messgerät nach einem der vorhergehenden Ansprüche, dadurch gekennzeichnet, dass die Lichtübertragung mittels einer einzigen Faser (11) erfolgt, deren auf der Messstelle liegende Endfläche mit dem Material (7) belegt ist.

9. Messgerät nach einem der vorhergehenden Ansprüche, dadurch gekennzeichnet, dass das Material (7), vorzugsweise in Partikelform, als Bestandteil im Lichtleitermaterial vorhanden ist, und zwar im Faserkern und/oder im Fasermantel.

10. Messgerät nach einem der vorhergehenden Ansprüche, dadurch gekennzeichnet, dass das Material (7) in eine Hülle aus Gummi oder Glas eingeschlossen ist.

11. Messgerät nach einem der vorhergehenden Ansprüche, dadurch gekennzeichnet, dass das Material (7) im Verhältnis zu den lichteinleitenden und lichtfortleitenden Organen beweglich angeordnet ist.

## Claims

1. Fiber-optical temperature measuring device comprising a sensor carrying a material which is subjected to the temperature to be measured and which has an absorption characteristic with a distinct temperature-dependent transition from a high to a low absorption, a so-called absorption edge, with optical fibers for transmitting light in said material and for transmitting a least part of the light not absorbed by the sensor to means for optical sensing of the absorption edge by determining the absorption-rate of the light transmitted into the said material and for evaluating the signals obtained during the optical sensing as a measure for the temperature, characterized in that said material (7) is a colouring pigment, that means for optical sensing of the absorption edge of said material are arranged for at least two wavelength ranges, whereby at least part of the absorption edge is situated in at least one of these wavelength ranges, and that the evaluation-unit includes means which compare the signals gained by the sensing in said at least two wavelength ranges in such a way that the output signal of the measuring device is independent of any attenuation in the optical channels.

2. Measuring device according to claim 1, characterized in that the colouring pigment is a metal oxide.

3. Measuring device according to claim 1, characterized in that the colouring pigment consist of red lead.

4. Measuring device according to claim 2, characterized in that the metal oxide consists of iron oxide.

5. Measuring device according to any of the preceding claims, characterized in that the temperature dependence of the absorption capability is derived from the spectral reflecting capability.

6. Measuring device according to any of the preceding claims, characterized in that the temperature dependence of the absorption capability is derived from the spectral transmission capability of the material.

7. Measuring device according to any of the preceding claims, characterized in that means (17) are arranged for forming the quotient between the values of the absorption capability of the material for two different wavelength ranges, and that means are arranged for converting the value of the quotient into a temperature value.

8. Measuring device according to any of the preceding claims, characterized in that the transition of light takes place with one single fiber (11), the end surface of which is located at the measuring point and is covered with said material (7).

9. Measuring device according to any of the preceding claims, characterized in that the material (7) is included as a constituent in the light transmitting material, preferably in particulate form, in either the core of the fiber and/or the shell of the fiber.

10. Measuring device according to any of the preceding claims, characterized in that said material (7) is enclosed in a casing of rubber or glas.

11. Measuring device according to any of the preceding claims, characterized in that said material (7) is arranged to be movable in relation to the elements transmitting light to and from said material.

**Revendications**

1. Appareil à fibres optiques pour la mesure de la température, comportant un capteur comprenant un matériau exposé à la chaleur dont la température est à mesurer et dont le spectre d'absorption présente un passage marqué contre l'absorption élevée et basse, dépendant de la température et désigné par arête d'absorption, des fibres optiques pour faire passer de la lumière dans ledit matériau et pour retourner au moins une partie de la lumière qui n'a pas été absorbée par le capteur vers le dispositif servant à explorer l'arête d'absorption par détermination du degré d'absorption de la lumière envoyée sur le matériau et à évaluer, en tant que mesure de la température, les signaux obtenus lors de l'exploration optique, caractérisé par le fait que ledit matériau (7) est un pigment coloré, que les dispositifs pour l'exploration optique de l'arête d'absorption dudit matériau (7) sont prévus pour au moins deux gammes de longeurs d'ondes au moins une partie de l'arête d'absorption se situant dans au moins l'une de ces gammes de longueurs d'ondes, et que l'unité d'évaluation comporte des dispositifs qui comparent les signaux obtenus par l'exploration dans au moins les deux gammes de longueurs d'ondes de manière que le signal de sortie de l'appareil de mesure soit indépendant des atténuations.

2. Appareil de mesure selon la revendication 1, caractérisé par le fait que le pigment coloré est un oxyde métallique.

3. Appareil de mesure selon la revendication 1, caractérisé par le fait que le pigment coloré est constitué par du minium de plomb.

4. Appareil de mesure selon la revendication 1, caractérisé par le fait que l'oxyde métallique est un oxyde de fer.

5. Appareil de mesure selon l'une des revendications précédentes, caractérisé par le fait que la dépendance en fonction de la température du pouvoir d'absorption est dérivée du pouvoir réfléchissant spectral du matériau.

6. Appareil de mesure selon l'une des revendications précédentes, caractérisé par le fait que la dépendance en fonction de la température du pouvoir d'absorption est dérivée du pouvoir spectral de transmission du matériau.

7. Appareil de mesure selon l'une des revendications précédentes, caractérisé par le fait qu'il est prévu des dispositifs (17) servant à former le quotient entre deux valeurs du pouvoir d'absorption du matériau, qui correspondent à des gammes différentes de longueurs d'ondes, et des dispositifs pour convertir la valeur du quotient en une valeur de mesure de la température.

8. Appareil de mesure selon l'une des revendications précédentes, caractérisé par le fait que la transmission de la lumière est opérée à l'aide d'une fibre unique (11) dont la face terminale située au niveau de l'emplacement de la mesure, est pourvue du matériau (7).

9. Appareil de mesure selon l'une des revendications précédentes, caractérisé par le fait que le matériau (7), de préférence sous la forme de particules, est présent sous la forme d'un élément constitutif dans le matériau du guide d'onde, plus particulièrement dans le noyau de la fibre et/ou dans l'enveloppe de la fibre.

10. Appareil de mesure selon l'une des revendications précédentes, caractérisé par le fait que le matériau (7) est enfermé dans une enveloppe en caoutchouc ou en verre.

11. Appareil de mesure selon l'une des revendications précédentes, caractérisé par le fait que le matériau (7) est disposé de façon à être mobile par rapport aux éléments acheminant la lumière et aux éléments évacuant la lumière.

0 006 530

Fig. 1

Fig. 2

Fig. 4

Fig. 5

Fig. 6

Fig. 3

Fig. 7

Fig. 8

Fig. 8a